Europäisches Patentamt

European Patent Office

Office européen des brevets

(11) Publication number: **0 385 232**
A1

# (12) EUROPEAN PATENT APPLICATION

(21) Application number: **90103222.7**

(22) Date of filing: **20.02.90**

(51) Int. Cl.5: **B60R 22/00**

(30) Priority: **02.03.89 US 317754**
    **22.01.90 US 465637**

(43) Date of publication of application:
    **05.09.90 Bulletin 90/36**

(84) Designated Contracting States:
    **DE FR GB IT SE**

(71) Applicant: **Forster, Lloyd M.**
    **1827 Golf Ridge Drive**
    **Bloomfield Hills, Mi. 48013(US)**

(72) Inventor: **Forster, Lloyd M.**
    **1827 Golf Ridge Drive**
    **Bloomfield Hills, Mi. 48013(US)**

(74) Representative: **Wehnert, Werner, Dipl.-Ing. et**
    **al**
    **Mozartstrasse 23**
    **D-8000 München 2(DE)**

(54) **Comfort feature.**

(57) Comfort feature method and apparatus providing frictional resistance to retraction of the static loop of an automotive vehicle emergency inertia responsive shoulder belt retractor system. A light comfortable back tension imposed by shoulder belt engagement contact with the occupant is sufficient to initiate self-energized frictional resistance to arrest relatively heavy tension retraction without preventing belt retraction to an occupant contact or completely retracted condition upon any slack arising from occupant movement belt disengagement.

FIG.1

**COMFORT FEATURE**

BACKGROUND OF THE INVENTION

Automotive vehicles equipped with shoulder belt retractors, particularly in the United States, include "comfort feature" means for relieving uncomfortable retraction belt tension on the occupant Typically, a shoulder belt retractor includes a coiled spring actuated wind -up reel for the belt webbing which passes through a static loop mounted on the vehicle door pillar above occupants shoulder from which the belt extends across the chest of the occupant to a buckle latch at an inside anchor point. Upon reaching a sitting position with engagement of the shoulder belt retracted under wind-up belt tension, the comfort feature enables the occupant to manually extract the belt to a loosened condition upon which a latch in the retractor mechanism locks the belt against retraction. Such comfort feature is desirable to relieve the occupant from uncomfortable shoulder belt retraction force which often deters an occupant from using the shoulder belt with its safety advantages.

Extraction of the shoulder belt against the retractor spool wind-up spring is normally permitted in an emergency locking retractor having an inertia responsive locking system against extraction. Accordingly, extraction can be accommodated not only to initially secure the belt buckle, as in a nonpassive manual system, but also permits the occupant to move away from the seat back, as when the driver reaches into the glove compartment or otherwise This has necessitated a sophisticated comfort feature locking mechanism which will cause release of the comfort feature locking mechanism from an overextended extraction subject to manual resetting upon return to normal sitting position.

Typical functional requirements established by a United States Automotive Vehicle manufacturer are as follows:

COMFORT FEATURES FOR EMERGENCEY LOCKING RETRACTORS

Functional Requirements

1. The comfort lock feature must function as follows:

a) Extend the webbing from the retractor to the working range of the belt (distance indicated on each retractor assembly drawing.)

b) Let the belt retract a minimum of 6 inches (153 MM)

c) Extract the belt 1.2 inches (31 MM) maximum and release belt. The comfort lock must engage to prevent retraction.

d) Extract belt 4 inches (102 MM) and release. The belt must return to within 1.0 inch (25 MM) of the comfort lock position previously set. Full retraction is a failure of the system.

e) Extract belt 6 inches (153 MM) and release. The belt must fully retract without locking.

Notwithstanding such requirements and manufacturing compliance therewith, possibilities of malfunction have led to additional provisions. For example, if the buckle is disengaged while the comfort feature continues to lock the retractor against belt retraction, the loose belt may hang out of the vehicle when the door is opened for occupant exit and left dangling when the door is shut -- even after reentry if the belt is not manually actuated to retraction mode. In order to solve this problem, door opening responsive mechanism has been added to release the comfort feature belt locking mechanism when the door is opened; or in an alternative system when the belt is loose from disengagement

Notwithstanding the incorporation of effective mechanisms involved in meeting the foregoing functional requirements, including door opening or buckle disengagement release of the comfort feature locking mechanism, possibilities of malfunction have continued to persist in "state-of-the-art" retraction systems in use at the present time. For example, if the driver should reach for the glove compartment on the passenger side, extracting the belt beyond the comfort feature range, (6 inches in the above specification) the belt must fully retract without locking upon the driver's return to the seat back position and, in most cases, the retraction system will so function subject to resetting the comfort feature when the occupant is in driving position. However, should the driver hesitate, after partial return from reaching the glove compartment sufficiently to restore the comfort feature mode of operation, and then reach back less than 6 inches, an inadvertent comfort feature relocking may occur with the belt in an excessively loose condition which, if not observed and remedied by the driver, may effectively disable the shoulder belt restraint system and result in an unexpected driving hazard. This current problem is sufficiently serious that consideration is being given to entirely eliminating the comfort feature in future models, notwithstanding its desirability for occupant comfort and inducement to shoulder belt use.

Another limitation of current comfort feature systems in use results from excessive manual loosening beyond the extent necessary to relieve uncomfortable belt tension against the occupant's body. Surveys have shown that a majority of comfort feature users extract the belt beyond the necessary comfort position and thereby at least partially reduce the effectiveness of the shoulder belt system as a safety provision.

Recent implementation of passive shoulder belt retraction systems, for example with door mounted retractors which permit occupants to enter and exit without manual buckling and unbuckling, render minimum extension of the shoulder belt for comfort even more critical since additional belt webbing is involved in the passive restraint systems subject to an extra degree of stretching upon emergency inertia locking.

## BRIEF DESCRIPTION OF THE PRESENT INVENTION

The method of the present invention imposes snubbing of the webbing at a position intermediate the occupant and retraction force automatically in response to a relatively light back tension imposed by mere shoulder belt contact engagement with the occupant. Further retraction by the relatively heavy retraction force is thereby arrested without preventing further retraction upon any release or loosening of the back tension imposed by such shoulder belt engagement with the occupant. The back tension of such method is sufficiently light to entirely eliminate discomfort to the occupant while being responsive to slack upon release to cause completion of retraction from any position of extension. Such method eliminates the need for functional requirements and associated mechanism in the retractor of the present "state-of-the-art" comfort lock feature, such as outlined above, and avoids the requirement for door opening or other release mechanism for the comfort feature, as well as the potential for malfunctioning upon overextension in reaching by the occupant such as described above. In addition, the method assures belt retraction into actual contact engagement with the occupant under all circumstances so as to eliminate any slack associated with the conventional comfort feature contributing to lost motion in the effective application of a restraining force of the shoulder belt in an emergency. Finally, the method provides the advantage of completely automatic operation rendering unnecessary the manual extraction of the shoulder belt to set the comfort feature

Preferred apparatus for implementing method of the present invention includes an attachment to a conventional static loop mounted on an automotive body pillar above the occupant's shoulder which is responsive to transition in shoulder belt webbing in use by an occupant between a slack condition, incident to disconnecting the belt or to an occupant returning from belt extending position to a normal seated attitude, and a condition where all slack is taken up with webbing in contact with occupant's chest under very light unobjectionable tension. In the preferred embodiment illustrated in the drawings, a pivoted lever having a fulcrum closely adjacent to the belt webbing at the top of its passage through the static loop is provided with a minimal extension for self-energized snubbing of the webbing against the static loop bar whenever the main body of the lever of substantial length is engaged by webbing projecting beyond the static loop under light tension upon elimination of slack during occupant's use. The fulcrum is yieldably mounted on the static loop body for displacement to a nonsnubbing position upon extraction of the belt while worn by the occupant. The lever is configured to hang loosely without snubbing contact in response to slack in the belt during retraction, or during extraction in a vertical direction with the fulcrum in its normal effective position.

The lever is preferably provided with a supplemental lightly preloaded lever yieldable under minor adjustments in the occupant's chest position to provide a slight "lost motion" in the light contact pressure operation of the belt before any extraction movement of the occupant encounters the relatively heavier resistance of the main retraction spring.

## BRIEF DESCRIPTION OF THE DRAWINGS

Fig. 1 is a perspective face view of a conventional static loop mounted on a passenger car pillar to which the attachment of the present invention has been applied;

Fig. 2 is an oblique view of the static loop shown in Fig. 1 with belt webbing in slack condition;

Fig. 3A is a partially sectioned side view of the Fig. 1 static loop illustrating the snubbing relation of the attachment;

Fig. 3B is a view similar to Fig. 3A illustrating a slack nonsnubbing condition of the attachment;

Fig. 3C is a view similar to Fig. 3A illustrating a nonsnubbing condition of the attachment during belt extraction while the webbing engages the snubbing lever;

Fig. 4 is a sectional view of the lever and fulcrum subassembly per se shown in the complete assembly of Figs 1-3;

Figs. 5A, 5B and 5C are views similar to Figs. 3A, 3B and 3C illustrating a preferred modification;

Fig. 6 is a perspective view similar to Fig. 2 illustrating a further preferred embodiment;

Fig. 7 is a rear perspective view of the static loop shown in Fig. 6; Fig. 8A is a sectional view taken along the line 8-8 of Fig. 6 illustrating the belt webbing in slack condition;

Fig. 8B is a sectional view taken along the line 8-8 of Fig. 6 illustrating the snubbing relation of the attachment;

Fig. 8C is a sectional view taken along the line 8-8 of Fig. 6 illustrating a nonsnubbing condition of the attachment during belt extraction while the webbing engages the snubbing lever;

Fig. 9 is a fragmentary sectional view taken along the line 9-9 of Fig. 8A;

Fig. 10 is a detail view of the snubbing elements per se shown assembled in Fig 9;

Fig. 11 is a front elevation of the snubbing elements per se illustrated in Fig. 10;

Fig. 12 is a front elevation of the fulcrum element per se illustrated in assembled relation in Figs. 6, 8A, 8B, and 8C;

Fig. 13 is a side elevation of the snubbing element illustrated in Fig. 12; and

Fig. 14 is a front elevation of the actuating lever per se illustrated in assembled relation in Figs. 6, 8A, 8B, and 8C.

## DETAILED DESCRIPTION OF PREFERRED METHOD

Typical spring retractors may include extended retraction forces in excess of 3 lbs. A substantial variation in spring retraction force occurs upon progressive retraction. Ideally, the comfort feature of the present preferred method would automatically arrest retraction whenever and only when all slack is taken up with the belt engaging the occupant with insensible tension and without preventing further retraction upon any development of slack from occupant movement or disengagement of the shoulder belt. Elimination of minimum impedence is also desirable whenever slack arises so as not to delay any retraction required to take up the slack or return the belt to fully retracted condition.

A preferred approach, responsive to the transition between slack and occupant engaging condition of belt webbing, is actuated to provide snubbing with high mechanical advantage actuated by relatively light back tension whenever slack is eliminated in such transition while the belt webbing is projecting from the static loop toward occupant engagement

## DETAILED DESCRIPTION OF FIRST EMBODIMENT

With reference to the drawings, conventional static loop hanger 10 swivelly attached by bolt 11 to auto body pillar 12, is equipped with a shoulder belt having vertical webbing 13 extending to a conventional spring actuated retractor, having an inertial system for locking the belt against extraction under emergency deceleration conditions arising from accident or otherwise, and having an operative webbing extension 14 for passing over the shoulder and chest of the occupant to an attachment buckle normally including a further lap engaging extension of the belt to an attachment point of the retractor. Retraction and extension of the belt for occupants use takes place in the vertical webbing 13 which is wound on a coiled spring actuated reel in the retractor.

In the application of the comfort feature attachment of the present invention, webbing 13 is normally under constant retraction tension, which may be in the order of 3 pounds or more to assure rapid retraction of the belt including the weight of the connector upon occupant's release, thereby avoiding any possibility of belt webbing hanging out of the door upon departure of the occupant.

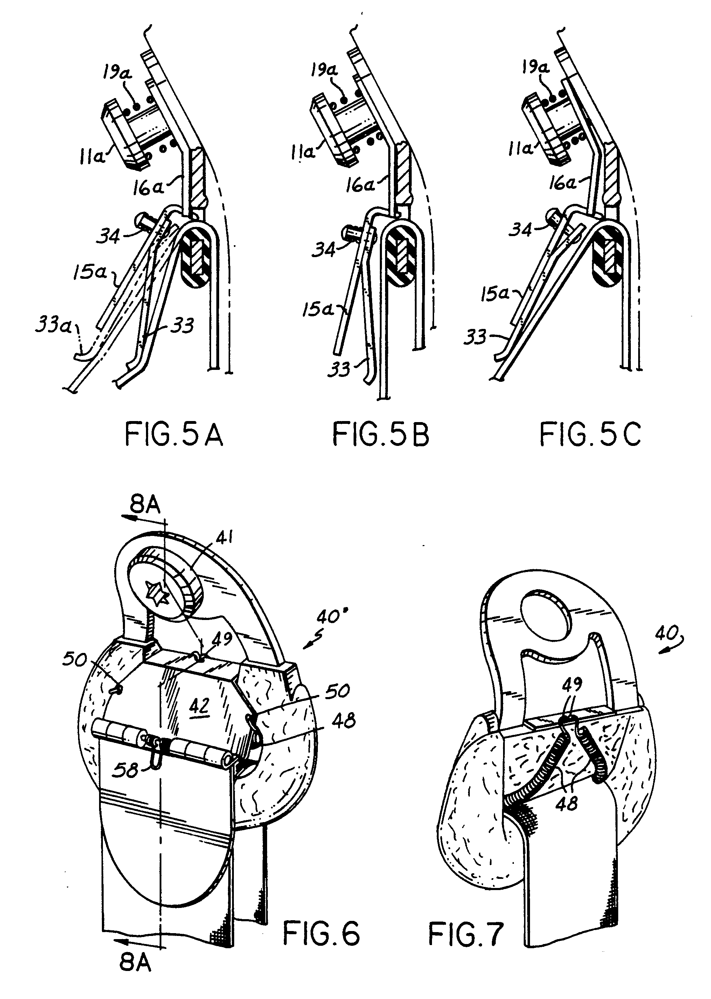

The attachment of the present invention comprises snubbing lever 15 and fulcrum 16 attached by a pair of rivets 17 to a vertical position 18 of static loop 10 with springs 19 urging fulcrum 16 against spacing washer 20 and reaction stop 21 immediately above slot 22 for passage of belt webbing in static loop. As an alternative, illustrated in Figs. 5A, 5B, and 5C, the fulcrum 16a may be constructed with an extension for attachment by bolt 11a, instead of rivets 17, and made as a sheet metal element resiliently spring loaded, as by spring 19a, to its effective fulcrum position as shown in Fig. 5A. Such alternative will particularly facilitate attachment to a standard static loop without any modification or removal of the belt in order to accommodate "aftermarket" applications to cars which have no "comfort feature'.

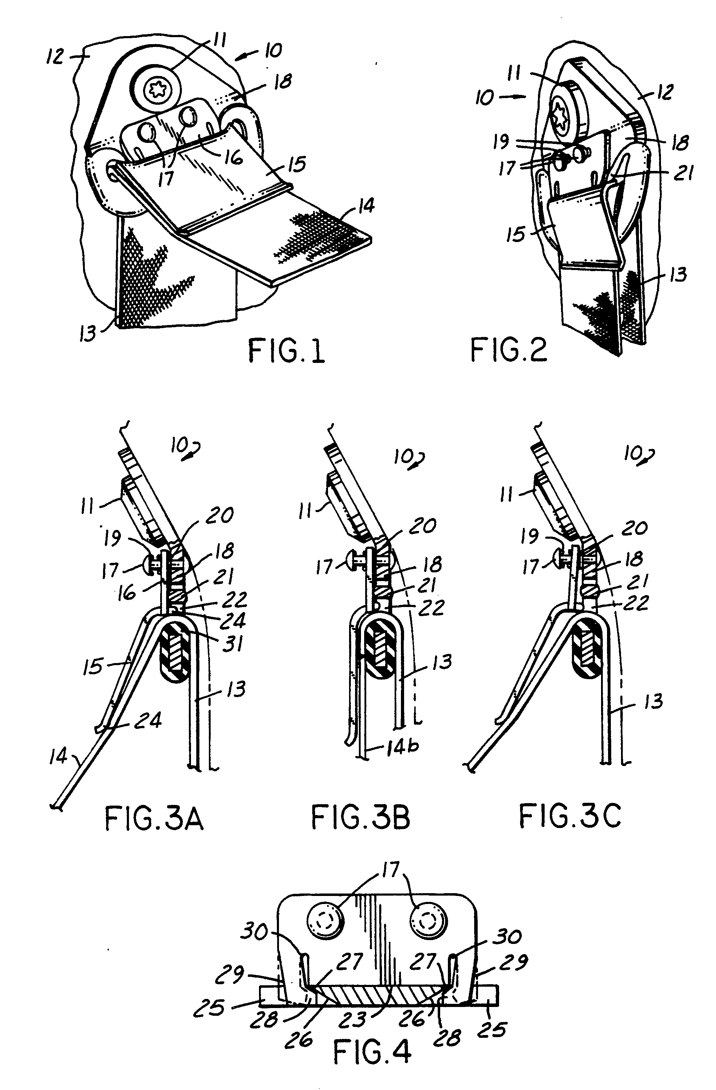

A pivotal connection between fulcrum 16 and snubbing lever 15, best illustrated in Fig. 4, includes fulcrum surface 23 immediately adjacent snubbing end 24 of lever 15 having a minimal extension beyond fulcrum surface 23 in order to maximize mechanical advantage of snubbing lever 15 from light contact pressure at lever end 24 from belt webbing 14 when worn by occupant with slack eliminated by contact with the occupant's chest. Since only a few thousandths of an inch displacement of snubbing end 24 is involved between complete freedom of contact and full snubbing of the belt webbing, adequate high mechanical advantage for actuation by completely comfortable back tension in webbing 14 can be accomplished with a relatively short lever arm 15, as well as complete freedom from snubbing contact with the webbing under slack belt conditions such as illustrated in Fig. 3B

Manual extraction of belt webbing 14b in a vertical direction as shown in Fig. 3B can likewise be accomplished without any displacement of fulcrum 16 or frictional resistance by end 24 of the snubbing lever.

With reference to Fig. 3C, extraction of the belt when in contact with lever 15, either by occupant movement or nonvertical manual extraction, is accommodated by yielding of fulcrum 16 against bias of spring 19 to move snubbing end 24 laterally out of compression contact with the adjacent webbing providing clearance displacement so that only frictional surface contact with snubbing lever 15 will be added to the normal resistance of retraction spring and static loop to the extraction of belt webbing, such as involved when the occupant moves to the glove compartment or other belt extending position or manually extracts belt webbing in a nonvertical direction.

A supplemental comfort feature may be, and preferably is, included by employing springs 19 or 19a with sufficient preload to resist fulcrum displacement to nonsnubbing clearance until extraction tension approaches retraction tension in webbing 13, and by employing lever means which will yield from an initial lightly preloaded effective snubbing position to accommodate minor occupant shifts in position without displacing the fulcrum from its effective snubbing position; for example, a supplemental lightly preloaded sheet metal lever 33, as illustrated in Figs. 5A, 5B and 5C, with resilient means adapted to yield to permit "lost motion" in the light contact pressure snubbing operation of the belt. Such lost motion is illustrated in Fig. 5A by the relative solid line of lever 33, spaced from snubbing lever 15a, and phantom line 33a with lost motion taken up but with no displacement of snubbing lever 15a from its effective snubbing position. By this means, comfortable contact may be extended to cover minor occupant adjustments in sitting position without losing the safety of effective restraint upon sudden deceleration.

With reference to Fig. 4, in order to provide a pivotal connection between snubbing lever 15 and fulcrum 16 (15a and 16a in the case of Figs. 5A-5C) closely adjacent the minimal snubbing extension 24, a loose but permanent connection is provided by lateral clearance slots 25 on either side of lever 15 having bevelled inner extremities 26 loosely engageable by matching bevelled ends 27 of slot engaging projections 26 loosely engageable by matching bevelled ends 27 of slot engaging projections 28 below fulcrum surface 23 which are crimped into permanent assembled relation by compression of fulcrum edges 29 accommodated by slots 30. Adequate clearance for free pivotal movement of snubbing lever 15 relative to fulcrum 16 assures desired snubbing and free snubbing release operation with spring 19 provided to position fulcrum 16 in normal snubbing attitude as shown in Figs. 3A and 3B. Such position is firmly maintained by retraction tension webbing 13 during normal snubbing action

As best shown in Fig. 1, snubbing lever 15 preferably extends the full width of belt webbing in order to minimize wear from snubbing engagement and to match the conventional curvature in the static loop element 31 engaged by belt webbing so as to provide full snubbing contact across the width of the belt when extended in normal occupant engaging attitude.

## DETAILED DESCRIPTION OF PREFERRED EMBODIMENT

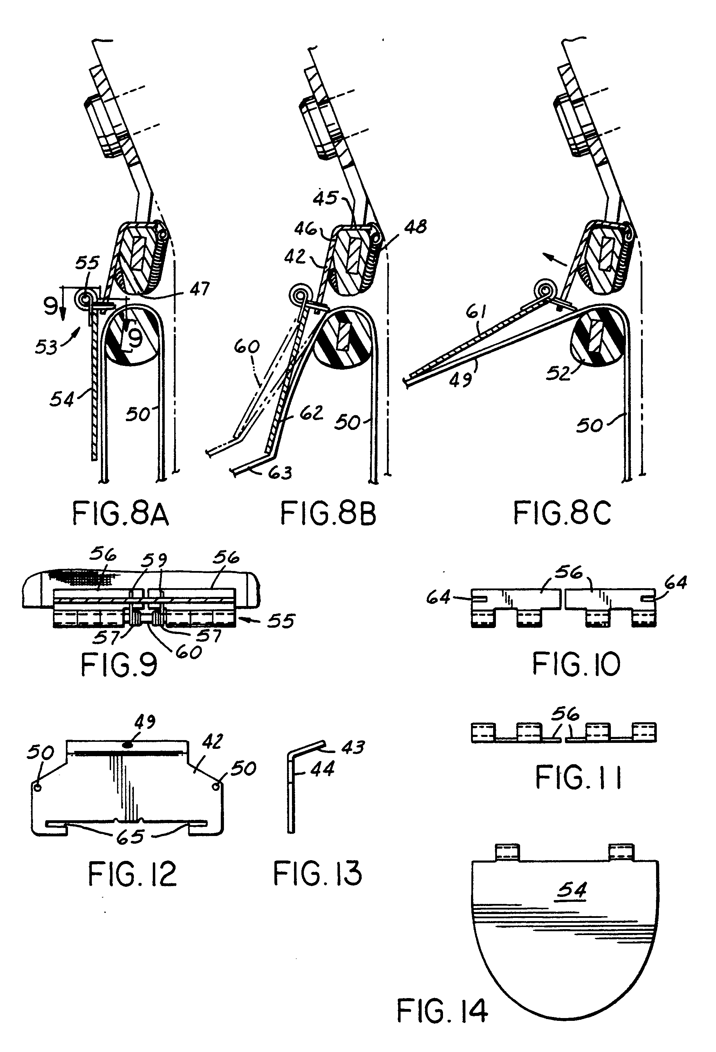

With reference to Figs. 6-14, a preferred embodiment includes elements and functions similar to the modification of Figs. 5A, 5B, and 5C adapted to a similar static loop 40 in a manner permitting attachment, if desired, without removing pillar bolt 41 premounted in a conventional manner. Fulcrum 42 is formed as a sheet metal stamping with angled surfaces 43 and 44 accurately matching molded planar surfaces 45 and 46 respectively of plastic body 47. Fulcrum 42 is retained in operative position, as shown in Figs. 8A and 8B by a pair of closely wound preload springs 48 passing through upper end extremities of the loop webbing passage connected at upper center 49 and either side edge 50 of fulcrum 42 with preload tension. The operative position of the fulcrum is retained unless and until extraction tension on the occupant side of the webbing 49 approaches retractor tension on the webbing 50 which is calibrated to overcome the preload of springs 48 with slight displacement of fulcrum 42, as illustrated in Fig. 8C, and eliminate compressive snubbing of webbing 49 against adjacent surface 51 of static loop body 52.

Snubbing assembly 53 comprises lever 54 hinged at 55 to a pair of snubbing elements 56 with torque spring 57 mounted on the hinge pin having loop 58 engaging lever 54 and ends 59 engaging snubbing elements 56 preloading them to a right angle hinge limit position as shown in Fig. 8A, but yieldable to a hinge opening position as shown at phantom position 60 and extraction position 61 in Figs. 8B and 8C. The preload of torque spring 57 is calibrated to resist any hinge opening until effective snubbing takes place, as illustrated at 62 in Fig. 8B, preventing any further retraction by retractor tension in belt webbing 50 while leveraged light occupant engaging tension prevails in belt webbing 63. Multiple coils in torque spring 57 provide a low spring rate so that negligible added belt tension is felt by the occupant in actuating lever 54 from initial snubbing position 62 to hinge opening positions, such as shown at 60 and 61, so as to accommodate minor adjustments in an occupant's seating position.

When belt extraction is required, as illustrated in Fig. 8C, eg., in reaching for the glove compartment or otherwise, full retractor tension in webbing 50 is overcome with relief of webbing compression at surface 51 minimizing frictional resistance incident to webbing contact with snubbing elements 56. Upon return of the occupant to normal seated position, the extra webbing extracted will assume a slack condition without effective tension on lever 54 permitting automatic retraction until slack is taken up and light body tension is reimposed, as on webbing 63, to again effect snubbing under light body contact of the webbing.

It will be noted that manual extraction of the belt in a vertical direction, as illustrated in Fig. 8A, may be accomplished without any frictional impedance by the snubbing elements, for example in preparing for initial buckle connection, after which slack will automatically be taken up as described above.

As best illustrated in Figs. 9-11, dual snubbing elements 56 are provided in order to accommodate assembly interengagement of slots 64 with fulcrum slots 65 prior to insertion of hinge pin 66. Respective slots 64 and 65 are dimensioned to accomodate required pivotal actuation by lever 54, as between respective positions illustrated in Figs. 8A and 8B. Such pivotal movement of snubbing elements 56 is limited, however, by interslot engagement to prevent complete closing of the hinged elements 54 and 56 to their 90° relationship under belt extraction such as illustrated in Fig. 8C. This provides positive assurance that snubbing elements 56 will return to effective snubbing attitude, as illustrated in Fig. 8B, upon any belt extraction followed by return of the occupant to normal seated position.

While the respective comfort feature elements - fulcrum 42, lever 54 and snubbing elements 56 -- are constructed as relatively simple stampings, tolerance factors are important in order to assure optimum performance consistently, with minimum occupant contacting belt tension, minimum displacement of lever 54 to effective snubbing position, accomdation for minor adjustment in body position without webbing extraction, minimum resistance to required webbing extraction and minimum interference with belt retraction when the buckle is disconnected. While only a few thousandths of an inch in the displacement of the snubbing edge of elements 56 is involved between effective snubbing and free passage of the webbing, additional clearance for transition between the conditions of Figs. 8A and 8B is required to accommodate tolerances for the several related elements within production accuracy of precision stampings and the molded portions of the static loop. In this connection, the ratio of length of lever 54 to the projection of snubbing elements 56 beyond slots 64 provides the mechanical advantage for minimizing occupant contacting belt tension. A balancing of such ratio with the required displacement of the snubbing elements to accommodate practical tolerance stack up may be readily achieved through careful precise dimensioning of the respective parts.

From the foregoing description, it will be understood that the embodiments disclosed achieve substantially all of the objectives of the method in eliminating any interference with shoulder belt retraction, minimizing belt tension in contact with the occupant, accommodating extraction for initial buckle attachment and occupant movement to a belt extending position, automatic snubbing with belt webbing in occupant contact without slack, and automatic release of snubbing in response to any slack condition.

It will also be understood that through the simple expedient of adding the disclosed lever/fulcrum attachment to a conventional static loop, the provisions of "comfort feature" mechanism in the retractor, together with door opening responsive release mechanism, are dispensed with while solving all problems incident to excessive slack arising from either too loose manual setting or unintended latching in an excessive extended condition.

## Claims

1. Static loop for passing shoulder belt webbing extended under substantial tension from a vehicle car retractor, across the shoulder and chest of an occupant, equipped with comfort feature attachment means comprising frictional resistance snubbing means upon the belt at the static loop to arrest retraction for relieving occupant felt shoulder belt tension in response to take up of slack in the belt and engagement of the shoulder belt in light body contact.

2. Static loop of claim 1 wherein said snubbing means provides high mechanical advantage frictional snubbing by relatively light back tension in belt webbing upon slack take up.

3. Static loop of claim 2 wherein said snubbing means provides for passing said belt webbing into frictional engagement with an element of said static loop.

4. Static loop of claim 3 wherein said snubbing means includes a pivoted lever having a snubbing end at said element, and a lever arm of substantial length in contact with the belt when in use, said snubbing means also including a fulcrum provided adjacent the snubbing end at said element.

5. Static loop of claim 4 wherein said fulcrum is positioned to provide free webbing clearance between said element and snubbing end in response to vertical slack belt condition.

6. Static loop of claim 5 wherein said static loop includes resilient mounting means for said fulcrum to provide clearance displacement for said snubbing end relative to said element upon extraction of said belt webbing.

7. Static loop of claim 6 wherein said fulcrum is pivotally attached to said lever immediately adjacent said snubbing end by fulcrum projections engaging lever slots.

8. Static loop of claim 6 wherein said resilient mounting means is preloaded to resist said clearance displacement until extraction effort approaches said substantial tension, and wherein said lever arm has preloaded resilient means which will yield from an initial effective snubbing position under limited occupant adjustment of sitting position without displacing said fulcrum from its effective snubbing position.

9. Method for easing shoulder belt tension in a restraint system subject to substantial shoulder belt retraction force characterized by effecting frictional resistance upon the belt to arrest retraction in response to take up of slack in the belt and engagement of the shoulder belt in light body contact, said method including provision of high mechanical advantage in translating light tension into high frictional resistance.

10. Method of claim 9 and relieving said frictional resistance in response to shoulder belt extraction overcoming said retraction force.

11. Method of claim 10 and continuing to relieve said frictional resistance in response to renewal of slack condition following said extraction.

12. Method of claim 9 and providing for limited freedom to adjust body position while the shoulder belt remains in light body contact.

13. Method of claim 9 wherein apparatus for effecting said frictional resistance is in the vicinity of a static loop of said restraint system attached to a vehicle body structural pillar.

14. Method of claim 13 and effecting said frictional resistance by snubbing belt webbing against said static loop with a lever including a relatively short snubbing end, and a lever arm of substantial length.

15. Method of claim 14 and providing said lever with a yieldable lever arm for limited freedom to adjust body position while the shoulder belt remains in light body contact.

16. Method of claim 14 and eliminating said frictional resistance for vertical belt retraction with said shoulder belt disconnected.

17. Method of claim 10 and substantially limiting said frictional resistance to a retraction direction of said shoulder belt so as not to materially impede shoulder belt extraction.

18. Method of claim 17 and providing said comfort feature automatically without manual setting in response to initial occupant engagement contact of such shoulder belt.

19. Method of claim 18 and providing said frictional resistance self-energized by elimination of slack through belt retraction into light body contact with belt wearing occupant and self-limited in response to a slack condition in the occupant engaging belt.

20. Static loop of claim 1 having static loop hanger (10) including a static loop element (31) engaged by the belt, said snubbing means comprising a snubbing lever (15, 15a) including a snubbing end (24) for compressing the belt webbing against said element, a fulcrum (16, 16a) for said snubbing lever displaceably mounted on said hanger, and a spring (19, 19a) to preload the fulcrum (16, 16a) in its operative position for effective snubbing.

21. Static loop of claim 20 wherein said spring is yieldable to belt extraction tension for displacement of said fulcrum to a nonsnubbing position

22. Static loop of claim 7 wherein said snubbing means is provided with dual slotted snubbing elements interengaging slotted fulcrum projections, said snubbing elements having hinge projections assembled to hinge projections on said lever arm by hinge pin means.

23. Static loop of claim 20 wherein respective snubbing and lever arm elements are assembled with an approximate right angle limit of relative movement in one angular direction, with resilient torque spring means provided to preload said elements in said limit position, said preload being sufficient to assure effective snubbing without relative displacement of said hinge elements.

24. Static loop of claim 7 wherein said fulcrum comprises a stamping having planar angular related surfaces engaging matching static loop planar angular related surfaces, and preloaded spring means for displaceably retaining said surfaces in operative engagement, yieldable to relieve snubbing when extraction tension on belt snubbing approaches retractor tension.

FIG.1

FIG.2

FIG.3A

FIG.3B

FIG.3C

FIG.4

FIG.5 A  FIG.5 B  FIG.5 C

FIG.6  FIG.7

FIG.8A  FIG.8B  FIG.8C

FIG.9  FIG.10

FIG.12  FIG.13  FIG.11

FIG.14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 813 533 (BMW) <br> * Figures 1,2; page 5, lines 4-8; page 7, line 17 - page 8, line 32; page 9, lines 7-27 * <br> --- | 1-6,9-13,14,17-19 | B 60 R 22/00 |
| A | DE-A-3 145 897 (SCHLEICHER) <br> * Figures 1,9; page 6, lines 17-21; page 9, lines 3-12; page 13, lines 6-13 * <br> --- | 1-4,9-13,14,17-19 | |
| A | FR-A-2 612 137 (P. PAC DIFFUSION) <br> * Figures 1-3; abstract; page 3, line 16 - page 6, line 15 * <br> --- | 1-4,9-11,13,14,17-19 | |
| A | US-A-3 981 052 (PILARSKI) <br> * Figures 1-5; column 2, line 42 - column 3, line 46 * <br> ----- | 1-5,9-11,13,14 | |

**TECHNICAL FIELDS SEARCHED (Int. Cl.5)**

B 60 R

The present search report has been drawn up for all claims

| Place of search | Date of completion of the search | Examiner |
|---|---|---|
| THE HAGUE | 31-05-1990 | D'SYLVA C.H.A. |

EPO FORM 1503 03.82 (P0401)